Europäisches Patentamt

(19) European Patent Office

Office européen des brevets

(11) Numéro de publication : **0 299 016 B1**

(12) **FASCICULE DE BREVET EUROPEEN**

(45) Date de publication du fascicule du brevet :
25.09.91 Bulletin 91/39

(51) Int. Cl.⁵ : **B65G 43/08, B65G 47/32**

(21) Numéro de dépôt : 88900806.6

(22) Date de dépôt : 27.01.88

(86) Numéro de dépôt international :
PCT/CH88/00016

(87) Numéro de publication internationale :
WO 88/05417 28.07.88 Gazette 88/17

(54) **DISPOSITIF DE TRANSFERT DE PRODUITS TRANSPORTES PAR UN CONVOYEUR AINSI QU'UN PROCEDE POUR UTILISER CE DISPOSITIF.**

(30) Priorité : 27.01.87 FR 8701039

(43) Date de publication de la demande :
18.01.89 Bulletin 89/03

(45) Mention de la délivrance du brevet :
25.09.91 Bulletin 91/39

(84) Etats contractants désignés :
CH DE FR GB IT LI

(56) Documents cités :
EP-A- 0 187 424
FR-A- 2 259 750
FR-A- 2 492 783
GB-A- 2 003 441

(73) Titulaire : SAPAL, Société Anonyme des
Plieuses Automatiques
44, Av. du Tir Fédéral
CH-1024 Ecublens (CH)

(72) Inventeur : GILGIEN, Willy
En Lévremont
CH-1143 Apples (CH)

(74) Mandataire : Nithardt, Roland
Cabinet Roland Nithardt Conseils en Propriété
Industrielle S.A. Y-Parc Scientifique et
Technologique Chemin de la Sallaz Case
postale 3347
CH-1400 Yverdon-les-Bains (CH)

# Description

La présente invention concerne un dispositif de transfert de produits transportés par un convoyeur sans fin, sur une surface réceptrice, ce dispositif comportant au moins deux éléments rigides mobiles selon la direction de transport des produits sur le convoyeur, ces éléments rigides étant respectivement liés à deux organes souples sans fin formant chacun une boucle fermée, et agencés pour se déplacer en translation en entraînant les éléments rigides sur au moins un tronçon rectiligne commun, ainsi que deux mécanismes d'entraînement indépendants respectivement couplés auxdits organes souples sans fin, des moyens de commande de ces mécanismes d'entraînement et au moins des premiers moyens de détection agencés pour délivrer une information relative à l'arrivée de produits ou de groupes de produits sur ledit convoyeur et des seconds moyens de détection agencés pour délivrer une information relative au départ des produits ou des groupes de produits de ladite surface réceptrice.

Elle concerne également un procédé pour utiliser ce dispositif comportant au moins deux éléments rigides mobiles selon la direction de transport des produits sur le convoyeur, ces éléments rigides étant respectivement liés à deux organes souples sans fin formant chacun une boucle fermée, et agencés pour se déplacer en translation en entraînant les éléments rigides sur au moins un tronçon rectiligne commun.

Les lignes de fabrication et/ou de conditionnement de produits, notamment de produits alimentaires tels que des tablettes de chocolat, des bâtonnets de produit enrobés ou similaires, comportent souvent un ou plusieurs convoyeurs pour amener ces produits sur une ou plusieurs surfaces réceptrices qui peuvent être des plaques ou des rubans transversaux agencés pour prendre en charge une série de ces produits pour les transférer vers une station de traitement, par exemple une machine d'emballage.

Le passage du convoyeur d'amenée sur la surface réceptrice peut se faire de deux manières différentes.

La première consiste à lancer les produits, c'est-à-dire à utiliser l'énergie cinétique accumulée par les produits transportés par le convoyeur pour les faire passer sur la surface réceptrice. Cette méthode n'est pas adaptée à tous les produits et présente souvent l'inconvénient de perturber la position des produits. Les produits amenés en rangées sont souvent désalignés.

La seconde méthode consiste à pousser les produits au moyen de éléments rigides qui prennent en charge ces produits et les guident pendant leur déplacement. Ces éléments rigides sont en général associés à un transporteur ou une plaque intermédiaire qui stocke des produits à la sortie du convoyeur avant leur transfert sur la surface réceptrice. Dans la pratique, le chargement et le déchargement de ce transporteur intermédiaire ou de cette plaque ne peuvent pas être effectués simultanément, de sorte qu'on enregistre une perte de temps non négligeable au moment du passage des produits du convoyeur sur la surface réceptrice, due au fait qu'une série de produits déposés sur ce support intermédiaire doit d'abord être déchargée avant qu'une nouvelle série amenée par le convoyeur puisse y être déposée. Ceci constitue un inconvénient sérieux parce qu'il cause une certaine limitation de la cadence sur l'ensemble de la ligne.

Par ailleurs, un des problèmes qui se posent pour les lignes de conditionnement est celui de la mise en pas de produits individuels ou de rangées de produits. Les produits disposés par exemple par une bande transporteuse sans fin doivent être positionnés de telle manière que leur écartement relatif soit régulier. Dans ce but, ils doivent soit être freinés, soit être accélérés par rapport à la bande qui les transporte.

Dans certaines installations, et pour certains produits traités, le problème est de séparer un groupe de produits constitué par un nombre déterminé de ces produits, d'un ensemble de produits amenés en vrac par un convoyeur. Une telle installation est décrite par la publication française N° 2259750 et comporte deux circuits de barres de retenue synchronisés qui ont pour fonction d'assurer la séparation et le maintien en place de groupes composés par exemple de douze boîtes pendant leur mise en place sur un support amené par une autre voie en dessous de ces boîtes.

Ce même problème de séparation des produits est illustré par la demande de brevet britannique publiée sous le N° 2003441 qui décrit une installation comprenant deux roues à pales radiales qui agissent sur les produits. Dans ce cas, les pales de la première roue sont synchronisées avec l'arrière des produits amenés en contact les uns avec les autres, et celles de la seconde roue ont pour but d'accélérer les produits de manière à créer un espace constant entre deux produits successifs.

Tous les systèmes connus sont applicables à des rangées de produits dans lesquelles les produits individuels ne sont pas parfaitement alignés et à des rangées de produits qui ne sont pas nécessairement équidistantes.

la présente invention se propose de pallier les inconvénients mentionnés ci-dessus concernant les dispositifs prévus pour assurer le passage des produits du convoyeur d'amenée sur une surface réceptrice et pour résoudre les problèmes de la mise en pas des produits, ou groupes de produits, en réalisant en particulier un dispositif qui autorise le chargement et le déchargement simultanés d'un support intermédiaire, ce qui permet d'éviter une perte de temps d'attente entre ces deux étapes du processus, et un dispositif pour guider les produits, ou groupes de produits, pendant leur transport ou leur transfert.

Dans ce but, le dispositif selon l'invention est caractérisé en ce que ces premiers et seconds moyens de détection sont couplés auxdits moyens de commande, et en ce que ces moyens de commande sont conçus pour actionner lesdits mécanismes d'entraînement de façon indépendante en fonction de ces informations, de telle manière que lesdits éléments rigides soient actionnés de façon indépendante l'un de l'autre en retenant les produits suivants pendant que les produits précédents occupent la surface réceptrice, et en poussant les produits suivants vers la surface réceptrice lorsque celle-ci est dégagée.

Chaque organe souple sans fin porte avantageusement deux éléments rigides, décalés les uns par rapport aux autres dans le sens de leur déplacement, et montés transversalement par rapport à ces organes.

Selon un mode de réalisation préféré, chaque organe souple sans fin comporte deux chaînes ou bandes parallèles entre elles, les chaînes ou bandes de l'un des organes souples sans fin étant disposées parallèlement entre les chaînes ou bandes de l'autre organe souple sans fin.

Les deux chaînes ou bandes de l'un des organes souples sans fin sont de préférence reliés entre elles par deux éléments rigides, parallèles entre eux et perpendiculaires à la direction longitudinale des chaînes ou bandes correspondantes, ces éléments rigides étant décalés axialement l'un par rapport à l'autre, et les deux chaînes ou bandes de l'autre organe souple sans fin sont de préférence également reliées entre elles par deux éléments rigides transversaux, parallèles entre eux et perpendiculaires à la direction longitudinale des chaînes ou bandes correspondantes, ces éléments rigides étant décalés axialement l'un par rapport à l'autre.

Selon un mode de réalisation particulier, les chaînes ou bandes de l'un des organes souples sont tendues entre deux premiers axes parallèles et les chaînes ou bandes de l'autre organe souple sans fin sont tendues entre deux seconds axes parallèles. Les premiers axes peuvent être parallèles aux seconds ou l'un au moins des premiers axes peut être coaxial à l'un des seconds axes.

Selon un mode de réalisation préféré, chaque organe souple sans fin comporte une chaîne ou bande, ces deux bandes étant disposées parallèlement entre elles, et chaque chaîne ou bande porte au moins un élément rigide, le convoyeur et au moins le support intermédiaire étant disposés parallèlement et décalés latéralement par rapport auxdites chaînes ou bandes. De préférence, le support intermédiaire est une plate-forme fixe.

Selon un autre mode de réalisation avantageuse, le support intermédiaire est un ruban transporteur sans fin. Il peut également être constitué par un tronçon d'extrémité du convoyeur.

Le procédé d'utilisation du dispositif selon l'invention est caractérisé en ce que l'on commande de manière indépendante l'un de l'autre les mécanismes d'entraînement des deux éléments rigides mobiles en fonction d'informations transmises à des moyens de commande desdits mécanismes d'entraînement, en retenant les produits suivants pendant que les produits précédents occupent la surface réceptrice et en poussant les produits suivants vers la surface réceptrice lorsque celle-ci est dégagée.

La présente invention sera mieux comprise en référence à la description d'un exemple de réalisation et du dessin annexé dans lequel :

la fig. 1 représente une vue schématique en élévation d'une première forme de réalisation du dispositif selon l'invention,

la fig. 2 représente une vue en plan de dessus du dispositif selon la fig. 1,

les fig. 3 à 6 illustrent quatre phases successives du processus de fonctionnement du dispositif illustré par les fig. 1 et 2,

les fig. 7 à 10 représentent quatre vues distinctes illustrant quatre phases successives du processus de fonctionnement d'une variante du dispositif des figures précédentes, et

les fig. 11 et 12 représentent deux vues, respectivement en plan et en élévation, d'une variante du dispositif selon l'invention.

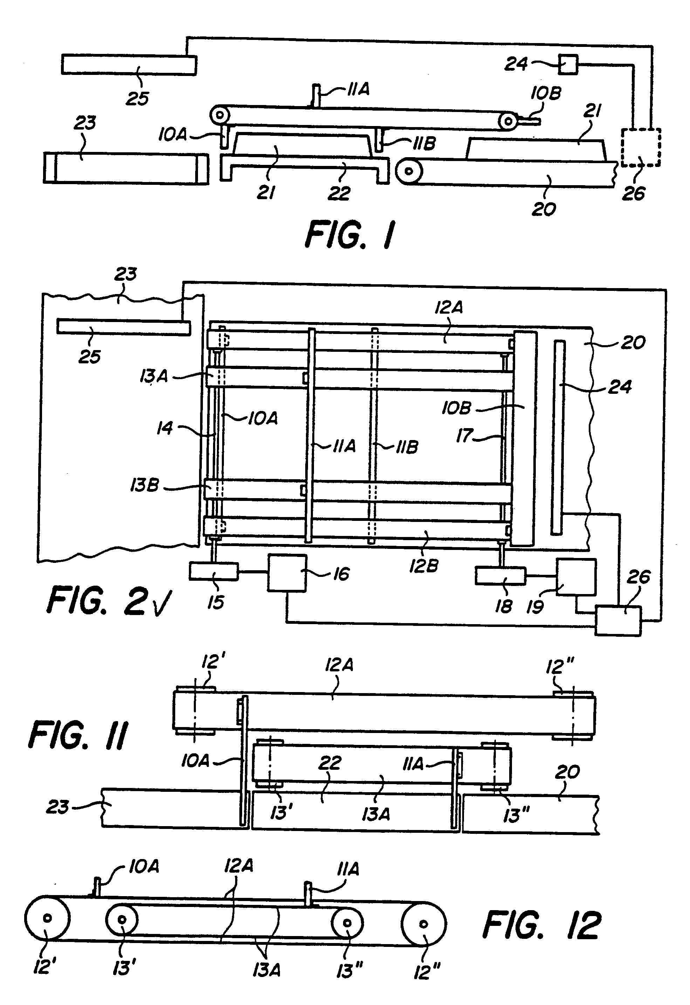

En référence aux fig. 1 et 2, le dispositif représenté comporte deux paires de éléments rigides tels que des poussoirs respectivement 10A et 10B et 11A et 11B, montés transversalement sur deux paires de chaînes 12A, 12B et 13A, 13B parallèles entre elles. Ces chaînes qui constituent lesdits organes souples sans fin formant une boucle fermée pourraient être remplacées par des courroies ou tout autre élément approprié. Comme le montrent les figures, les éléments rigides 10A et 10B, décalés l'un par rapport à l'autre dans la direction longitudinale des organes souples sans fin, sont solidaires des chaînes 13A et 13B. Les éléments rigides 11A et 11B, également décalés le long des chaînes, sont solidaires des organes souples sans fin 12A et 12B. On notera également que les chaînes 12A et 12B sont disposées parallèlement entre les chaînes 13A et 13B. Les chaînes 12A et 12B sont entraînées en synchronisme par un mécanisme d'entraînement schématiquement représenté par un axe d'entraînement 14, une roue d'entraînement 15 et un moteur d'entraînement 16. Les chaînes 13A et 13B sont également entraînées en synchronisme par un mécanisme d'entraînement schématiquement représenté par un axe d'entraînement 17, une roue d'entraînement 18 et un moteur d'entraînement 19.

Des premiers moyens de détection 24 sont montés au-dessus ou sur le convoyeur sans fin 20 pour délivrer une information relative à l'arrivée de produits ou de groupes de produits, et des deuxièmes moyens de détection 25 sont montés au-dessus ou sur la surface réceptrice 23 pour délivrer une information relative au départ des produits ou groupes de produits de cette surface.

Ces informations sont collectées par une unité de traitement centrale 26 qui est connectée aux moteurs d'entraînement 16 et 19, et constitue lesdits moyens de commande des mécanismes d'entraînement des poussoirs.

Ce dispositif de transfert, qui constitue l'objet de la présente invention, est associé à un convoyeur 20 destiné à amener des produits 21, un support intermédiaire 22 et une surface réceptrice 23. Dans l'exemple représenté, le support intermédiaire 22 est constitué par une plaque fixe. Il pourrait également être constitué par un transporteur sans fin. Par ailleurs, la surface réceptrice 23 est dans ce cas constituée par une bande transporteuse transversale qui est chargée d'évacuer les produits 21 selon une direction perpendiculaire aux déplacements des produits sur le convoyeur, ces produits étant amenés par rangées par le convoyeur et déposés, dans une première phase, sur la bande transporteuse intermédiaire.

la surface réceptrice 23 peut être constituée par un ruban transporteur disposé sensiblement dans le prolongement du convoyeur 20.

Par ailleurs, pour assurer une mise en pas des produits, l'ensemble convoyeur 20, support intermédiaire 22 et surface réceptrice 23 peut être constitué d'un seul ruban transporteur sans fin, ou de deux rubans transporteurs se déplaçant à des vitesses différentes. Dans ce cas, le support intermédiaire est une zone du premier ruban transporteur et la surface réceptrice peut être une zone du premier ruban transporteur ou du second ruban transporteur qui se déplace à une vitesse plus élevée que le premier.

Les poussoirs 10A, 10B, 11A et 11B ont une fonction double. La première fonction consiste à servir de butée d'appui pour les produits amenés par le convoyeur ou déplacés sur le support intermédiaire. La seconde fonction consiste à pousser les produits du convoyeur 20 sur le support intermédiaire 22 et de ce support intermédiaire sur le ruban transversal 23.

Dans la pratique, lorsqu'un produit ou une rangée de produits 21 est amené sur le support intermédiaire 22, le poussoir 10A se trouve dans la position représentée par la fig. 1. Le produit 21 est en attente. Si le support intermédiaire 22 est une plaque, ou un plateau fixe, le poussoir 10A ne joue en principe pas son rôle de butée. En revanche, si ce support est un ruban transporteur mobile, le poussoir 10A peut constituer une butée pour maintenir le produit 21 en attente.

le poussoir 11B est amené en attente derrière le produit 21 qui est lui-même en attente sur le support 22.

lorsque l'information relative au départ du produit précédent de la surface réceptrice est transmise, le poussoir 10A s'escamote et le poussoir 11B pousse le produit 21 sur la surface réceptrice. Ce poussoir prend alors la position que le poussoir 10A occupait précédemment. Le poussoir 10B, qui est couplé au poussoir 10A, vient prendre la position précédente occupée par le poussoir 11B pour servir de butée au produit suivant puis pour pousser le produit 21 en attente sur le support intermédiaire.

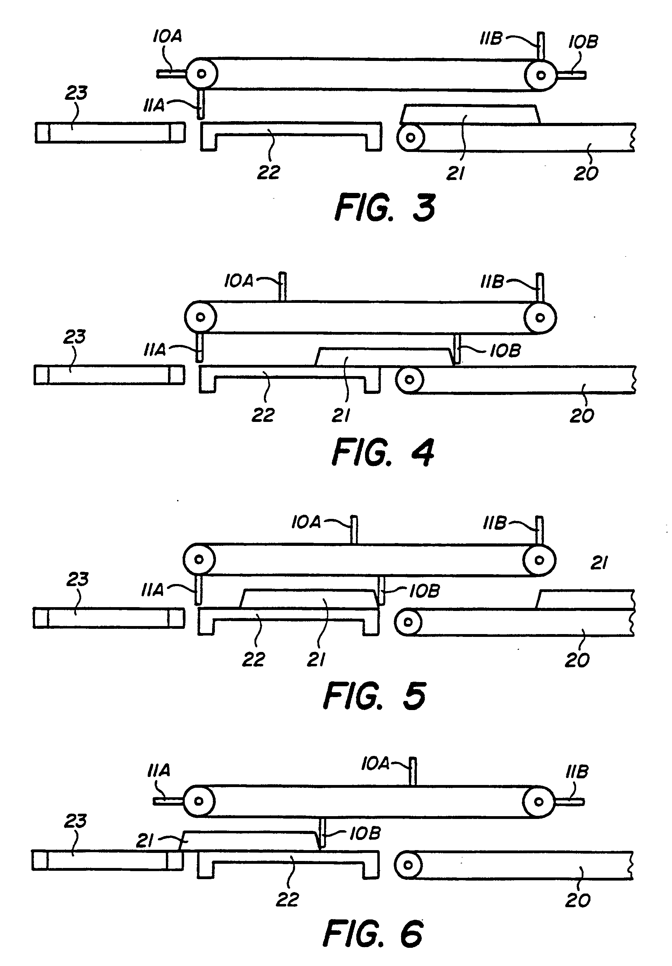

Comme le montre la fig. 3, une rangée de produits 21 est amenée par le convoyeur 20 à l'extrémité de ce dernier. Le support intermédiaire 22, qui constitue une zone d'attente destinée à recevoir les produits et à les stocker jusqu'au moment où le ruban transversal 23 a évacué ses produits, est à nouveau disponible pour recevoir une nouvelle série de produits. Pour effectuer le transfert des produits 21 du convoyeur 20 sur la zone d'attente 22, on utilise le poussoir 10B qui est entraîné par les chaînes 13A et 13B. Comme le montre la fig. 4, les poussoirs 10A et 10B, solidaires des chaînes 13A et 13B, sont entraînés par ces dernières alors que les poussoirs 11A et 11B, solidaires des poussoirs 12A et 12B, sont à l'arrêt. Le poussoir 11A se trouve en position à l'extrémité de la zone d'attente 22 et constitue de ce fait une butée d'arrêt contre laquelle le produit 21 entraîné par le poussoir 10B peut être poussé. Comme le montre la figure 5, le poussoir 10A s'est déplacé en même temps que le poussoir 10B alors que le poussoir 11B est resté en position d'attente pour prendre en charge un nouveau produit 21 amené par le convoyeur 20. Dès que la surface réceptrice 23 est libérée, le poussoir 11A se met dans la position représentée par la fig. 6 de sorte que le déplacement du produit 21 n'est plus empêché par la présence d'une butée frontale. Le poussoir 10B se remet en mouvement et effectue le transfert du produit 21 de la zone d'attente 22 sur la surface réceptrice 23. Le mouvement des poussoirs 10B et 10A s'arrête lorsque le poussoir 10B arrive à l'extrémité de la zone d'attente 22 pour occuper la fonction de butée d'arrêt préalablement occupée par le poussoir 11A.

Etant donné que les poussoirs 10 et les poussoirs 11 peuvent être actionnés indépendamment les uns des autres, le poussoir 11B peut effectuer le transfert d'un nouveau produit 21 amené par le convoyeur 20 avant que la zone d'attente 22 soit déchargée du produit 21 précédent repoussé par le poussoir 10B. Ce dispositif permet par conséquent d'assurer le chargement et le déchargement simultanés de la zone d'attente 22, ce qui constitue un gain de temps considérable par rapport aux systèmes antérieurs où la zone d'attente ne pouvait recevoir un nouveau produit que lorsque le produit précédemment déposé sur elle était évacué.

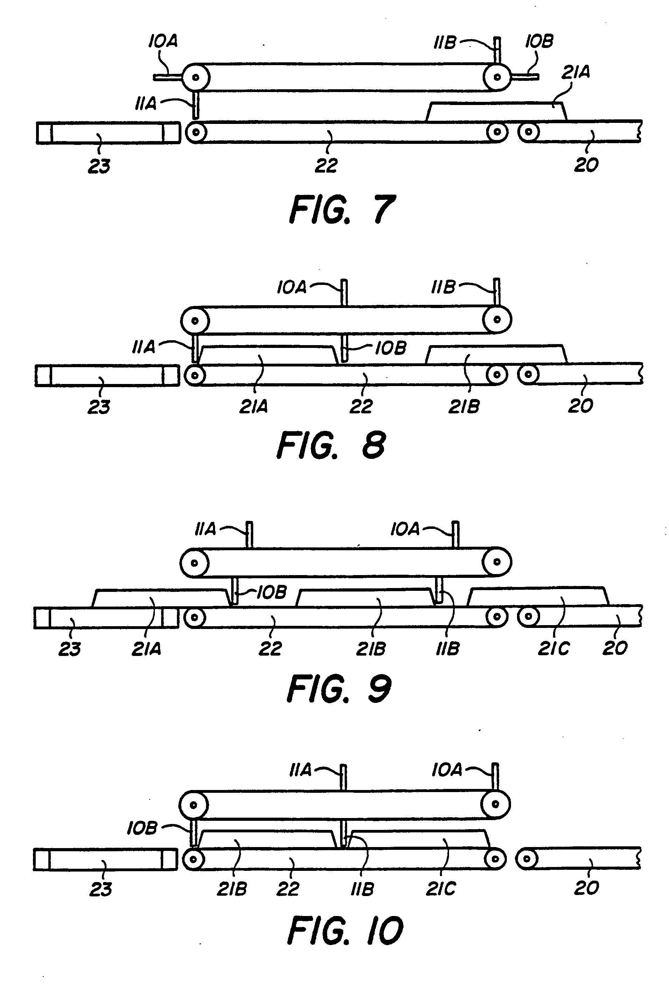

Dans l'exemple de réalisation illustré par les figures décrites ci-dessus, la zone d'attente 22 a une longueur sensiblement équivalente à celle du produit 21. Une telle réalisation n'est pas obligatoire et les figures 7 à 10 illustrent une forme de réalisation dans laquelle la zone d'attente 22 a une longueur telle qu'elle peut recevoir deux rangées successives de produits amenés par le convoyeur.

Comme précédemment, le dispositif comporte deux poussoirs 10A et 10B et deux poussoirs 11A et 11B respectivement entraînés par deux paires de chaînes 13A, 13B et 12A, 12B. Au cours d'une première phase illustrée par la fig. 7, un premier produit ou rangée de produits 21A est amenée par le convoyeur 20. Cette première rangée de produits est, comme le montre la fig. 8, prise en charge par le poussoir 10B et amenée sur la plaque ou la bande transporteuse intermédiaire constituant la zone d'attente 22 en butée contre le poussoir 11A qui est immobile. Un second produit ou rangée de produits 21B est amenée par le convoyeur 20. Cette seconde rangée de produits est prise en charge par le poussoir 11B. Dès que la surface réceptrice 23 est dégagée, le poussoir 10B se remet en mouvement et assure le transfert des produits 21A de la zone d'attente sur cette surface réceptrice. Simultanément les produits suivants 21B, pris en charge par le poussoir 11B, sont amenés en butée contre le poussoir 10B. Le poussoir 11B sert également de butée aux produits 21C qui ont été entretemps amenés par le convoyeur 20. Dès que la surface réceptrice 23 est évacuée, le poussoir 10B se dégage et cède le passage aux produits 21B poussés par le poussoir 11B. Les produits 21C sont à ce moment pris en charge par le poussoir 10A et amenés en butée contre le poussoir 11B qui a pris la position de la butée 10B telle qu'elle est représentée par la fig. 10.

Comme précédemment, on constate que les phases de chargement et de déchargement peuvent être opérées simultanément ce qui résout le problème de la perte de temps due à l'impossibilité d'effectuer simultanément ces deux phases du processus dans les systèmes antérieurs, et ceci pour des produits ou groupes de produits amenés à intervalles irréguliers.

Les figures 11 et 12 représentent une variante du dispositif comportant dans ce cas deux poussoirs 10A et 11A qui sont respectivement liés à deux mécanismes de commande comportant chacun un seul organe souple respectivement 12A et 13A. Les poussoirs sont rendus solidaires des organes souples correspondants. L'organe souple 12A, qui est par exemple une courroie, est tendu entre deux axes 12' et 12". L'organe souple 13A, qui peut également être une courroie, est tendu entre deux axes 13' et 13" qui sont parallèles aux précédents.

Ce dispositif peut être utilisé pour effectuer une mise au pas des produits. Il est bien évident que les axes pourraient être deux à deux coaxiaux et que les courroies pourraient être doublées selon les utilisations.

## Revendications

1. Dispositif de transfert de produits (21) transportés par un convoyeur sans fin (20), sur une surface réceptrice (23), ce dispositif comportant au moins deux élements rigides (10A, 10B ; 11A, 11B) mobiles selon la direction de transport des produits sur le convoyeur, ces éléments rigides étant respectivement liés à deux organes souples sans fin (12A, 12B ; 13A, 13B) formant chacun une boucle fermée, et agencés pour se déplacer en translation en entraînant les éléments rigides sur au moins un tronçon rectiligne commun, ainsi que deux mécanismes d'entraînement (14, 15, 16 ; 17, 18, 19) indépendants respectivement couplés auxdits organes souples sans fin (12A, 12B ; 13A, 13B), des moyens de commande (26) de ces mécanismes d'entraînement et au moins des premiers moyens (24) de détection agencés pour délivrer une information relative à l'arrivée de produits ou de groupes de produits sur ledit convoyeur (20) et des seconds moyens de détection (25) agencés pour délivrer une information relative au départ des produits ou des groupes de produits de ladite surface réceptrice, caractérisé en ce que ces premiers et seconds moyens de détection (respectivement 24 et 25) sont couplés auxdits moyens de commande (26), et en ce que ces moyens de commande sont conçus pour actionner lesdits mécanismes d'entraînement de façon indépendante en fonction de ces informations, de telle manière que lesdits éléments rigides (10A, 10B ; 11A, 11B) soient actionnés de façon indépendante l'un de l'autre en retenant les produits suivants pendant que les produits précédents occupent la surface réceptrice, et en poussant les produits suivants vers la surface réceptrice (23) lorsque celle-ci est dégagée.

2. Dispositif selon la revendication 1, caractérisé en ce que chaque organe souple sans fin porte deux éléments rigides (10A et 10B, respectivement 11A et 11B), décalés les uns par rapport aux autres dans le sens de leur déplacement et montés transversalement par rapport à ces organes.

3. Dispositif selon l'une quelconque des revendications précédentes, caractérisé en ce que chaque organe souple sans fin comporte deux chaînes ou bandes parallèles entre elles (12A, 12B) et (13A, 13B), les chaînes ou bandes (13A et 13B) de l'un des organes souples sans fin étant disposées parallèlement entre les chaînes ou bandes (12A et 12B) de l'autre organe souple sans fin.

4. Dispositif selon la revendication 3, caractérisé en ce que les deux chaînes ou bandes (12A et 12B) de l'un des organes souples sans fin sont reliées entre elles par deux éléments rigides (11A et 11B), parallèles entre eux et perpendiculaires à la direction longitudinale des chaînes ou bandes correspondantes, ces éléments rigides étant décalés axialement l'un par rapport à l'autre, et en ce que les deux chaînes ou bandes (13A et 13B) de l'autre organe souple sans fin sont également reliées entre elles par deux éléments rigides transversaux (10A et 10B), parallèles entre eux et perpendiculaires à la direction longitudinale des chaînes ou bandes correspondantes, ces éléments rigides étant décalés axialement l'un par rapport à l'autre.

5. Dispositif selon la revendication 5, caractérisé en ce que les chaînes ou bandes (12A et 12B) de l'un des organes souples sans fin sont tendues entre deux premiers axes parallèles, en ce que les chaînes ou bandes (13A et 13B) de l'autre organe souple sans fin sont tendues entre deux seconds axes parallèles, et en ce que les premiers axes sont parallèles aux seconds.

6. Dispositif selon la revendication 5, caractérisé en ce que l'un au moins des premiers axes est coaxial à l'un des seconds axes.

7. Dispositif selon la revendication 2, caractérisé en ce que chaque organe souple sans fin comporte une chaîne ou bande (12A, 13A), ces deux bandes étant disposées parallèlement entre elles, en ce que chaque chaîne ou bande porte au moins un élément rigide (10A, 11A), et en ce que le convoyeur (20) et au moins le support intermédiaire (22) sont disposés parallèlement et décalés latéralement par rapport auxdites chaînes ou bandes (12A, 13A).

8. Dispositif selon la revendication 1, caractérisé en ce que le support intermédiaire (22) est une plate-forme fixe.

9. Dispositif selon la revendication 1, caractérisé en ce que le support intermédiaire (22) est un ruban transporteur sans fin.

10. Dispositif selon la revendication 1, caractérisé en ce que le support intermédiaire (22) est constitué par un tronçon d'extrémité du convoyeur (20).

11. Procédé d'utilisation du dispositif selon l'une quelconque des revendications précédentes, ce dispositif comportant au moins deux éléments rigides mobiles selon la direction de transport des produits sur le convoyeur, ces éléments rigides étant respectivement liés à deux organes souples sans fin formant chacun une boucle fermée, et agencés pour se déplacer en translation en entraînant les éléments rigides sur au moins un tronçon rectiligne commun, caractérisé en ce que l'on commande de manière indépendante l'un de l'autre les mécanismes d'entraînement des deux éléments rigides mobiles en fonction d'informations transmises à des moyens de commande desdits mécanismes d'entraînement, en retenant les produits suivants pendant que les produits précédents occupent la surface réceptrice et en poussant les produits suivants vers la surface réceptrice lorsque celle-ci est dégagée.

## Patentansprüche

1. Vorrichtung für das Umsetzen auf eine Aufnahmefläche (23) von Produkten (21), die auf einem endlosen Förderer (20) transportiert werden, wobei diese Vorrichtung aus mindestens zwei beweglichen starren Elementen (10A, 10B ; 11A, 11B) nach der Richtung des Transports der Produkte auf dem Förderer besteht, wobei diese starren Elemente jeweils mit zwei endlosen biegsamen Organen (12A, 12B ; 13A, 13B) verbunden sind, die jeweils eine geschlossene Schleife bilden und für eine geradlinige Bewegung eingerichtet sind, wobei sie die starren Elemente auf mindestens einem gemeinsamen geradlinigen Strang mitnehmen, aus zwei unabhängigen mechanischen Antriebseinrichtungen (14, 15, 16 ; 17, 18, 19), die jeweils mit den besagten endlosen biegsamen Organen (12A, 12B ; 13A, 13B) gekoppelt sind, aus Steuereinrichtungen (26) für die besagten Antriebseinrichtungen, aus mindestens ersten Erfassungseinrichtungen (24), die ausgelegt sind, um eine Information über das Eintreffen von Produkten oder von Produktgruppen auf dem besagten Förderer (20) zu geben und aus zweiten Erfassungseinrichtungen (25), die ausgelegt sind, um eine Information über den Abgang der Produkte oder der Produktgruppen von der besagten Aufnahmefläche zu geben, **dadurch gekennzeichnet,** daß diese ersten und zweiten Erfassungseinrichtungen (24 und 25) mit den Steuereinrichtungen (26) gekoppelt sind und daß diese Steuereinrichtungen vorgesehen sind, die besagten Antriebseinrichtungen in Abhängigkeit von diesen Informationen getrennt derart zu betätigen, daß die besagten starren Elemente (10A, 10B ; 11A, 11B) unabhängig von einander betätigt werden, indem die nachfolgenden Produkte zurückgehalten werden, während die vorherigen Produkte die Aufnahmefläche belegen und indem die nachfolgenden Produkte in Richtung der Aufnahmefläche (23) geschoben werden, wenn diese geräumt ist.

2. Vorrichtung gemäß Anspruch 1, **dadurch gekennzeichnet,** daß jedes endlose biegsame Organ zwei starre Elemente (10A und 10B oder 11A und 11B) trägt, die in die Richtung ihrer Verstellung einander gegenüber versetzt und im Verhältnis zu diesen Organen quer angeordnet sind.

3. Vorrichtung gemäß irgendeinem der vorstehenden Ansprüche, **dadurch gekennzeichnet,** daß jedes endlose biegsame Organ zwei untereinander parallele Ketten oder Bänder (12A, 12B) und (13A, 13B) enthält, wobei die Ketten oder Bänder (13A und 13B) von einem dieser endlosen biegsamen Organe zwischen den Ketten oder Bändern (12A und 12B) des anderen endlosen biegsamen Organs parallel angeordnet sind.

4. Vorrichtung gemäß Anspruch 3, **dadurch gekennzeichnet,** daß die beiden Ketten oder Bänder (12A und 12B) von einem der endlosen biegsamen Organe untereinander durch zwei starre Elemente (11A und 11B) verbunden sind, die untereinander parallel und zu der Längsrichtung der zugehörigen Ketten oder Bänder senkrecht sind, wobei diese starren Elemente einander gegenüber axial versetzt sind, und daß die beiden Ketten oder Bänder (13A und 13B) des anderen endlosen biegsamen Organs ebenfalls untereinander durch zwei querliegende starre Elemente (10A und 10B) verbunden sind, die untereinander parallel und zu der Längsrichtung der zugehörigen Ketten oder Bänder senkrecht sind, wobei diese starren Elemente einander gegenüber axial versetzt sind.

5. Vorrichtung gemäß Anspruch 4, **dadurch gekennzeichnet**, daß die Ketten oder Bänder (12A und 12B) von einem der endlosen biegsamen Organe zwischen zwei ersten parallelen Achsen gespannt sind, daß die Ketten oder Bänder (13A und 13B) des anderen endlosen biegsamen Organs zwischen zwei zweiten parallelen Achsen gespannt sind und daß die ersten Achsen zu den zweiten Achsen parallel sind.

6. Vorrichtung gemäß Anspruch 5, **dadurch gekennzeichnet**, daß mindestens eine der ersten Achsen zu einer der zweiten Achsen koaxial ist.

7. Vorrichtung gemäß Anspruch 2, **dadurch gekennzeichnet**, daß jedes endlose biegsame Organ eine Kette oder Band (12A, 12B) enthält, wobei diese beiden Bänder untereinander parallel angeordnet sind, daß jede Kette oder Band mindestens ein starres Element (10A, 11A) trägt und daß der Förderer (20) und mindestens die Zwischenauflage (22) parallel angeordnet und gegenüber der besagten Ketten oder Bänder (12A, 13A) seitlich versetzt angeordnet sind.

8. Vorrichtung gemäß Anspruch 1, **dadurch gekennzeichnet**, daß die Zwischenauflage (22) eine feststehende Plattform ist.

9. Vorrichtung gemäß Anspruch 1, **dadurch gekennzeichnet**, daß die Zwischenauflage (22) ein endloses Förderband ist.

10. Vorrichtung gemäß Anspruch 1, **dadurch gekennzeichnet**, daß die Zwischenauflage (22) von einem Endstück des Förderers (20) gebildet ist.

11. Verfahren für die Anwendung der Vorrichtung gemäß irgendeinem der vorstehenden Ansprüche, wobei diese Vorrichtung aus mindestens zwei beweglichen starren Elementen je nach der Richtung des Transports der Produkte auf dem Förderer besteht, wobei diese starren Elemente jeweils mit zwei endlosen biegsamen Organen verbunden sind, die jeweils eine geschlossene Schleife bilden und für eine geradlinige Bewegung eingerichtet sind, wobei sie die starren Elemente auf mindestens einem gemeinsamen geradlinigen Strang mitnehmen, **dadurch gekennzeichnet**, daß die Antriebseinrichtungen der beiden beweglichen starren Elemente entsprechend von Informationen, die an Steuereinrichtungen der besagten Antriebseinrichtungen übermittelt werden, unabhängig voneinander betätigt werden, wobei die nachfolgenden Produkte zurückgehalten werden, während die vorherigen Produkte die Aufnahmefläche belegen und wobei die nachfolgenden Produkte in Richtung der Aufnahmefläche geschoben werden, wenn diese geräumt ist.

**Claims**

1. Device for transferring products (21) transported by an endless conveyor (20) onto a receiving surface (23), said device comprising at least two rigid members (10A, 10B ; 11A, 11B) movable according to the direction of transport of the products on the conveyor, said rigid members being respectively linked to two endless flexible members (12A, 12B ; 13A, 13B), each forming a closed loop, and arranged for translational displacement while driving the rigid members on at least one common rectilinear section, and two independent drive mechanisms (14, 14, 16 ; 17, 18, 19) respectively coupled with said endless flexible members (12A, 12B ; 13A, 13B), control means (26) for controlling said drive mechanisms and at least first detection means (24) arranged to deliver a signal relating to the arrival of products or groups of products on said conveyor (20) and second detection means (25) arranged to deliver a signal relating to the departure of the products or groups of products from said receiving surface characterized in that these first and second detection means (respectively 24 and 25) are coupled with said control means (26), and in that this control means is designed to actuate said drive mechanisms independently as a function of said signals, in such a manner that said rigid members (10A, 10B ; 11A, 11B) are actuated independently of each other, the following products being maintained while the preceding products are on the receiving surface and the following products being pushed towards the receiving surface (23) when this surface is clear.

2. Device according to claim 1, characterized in that each endless flexible member carries two rigid members (10A and 10B) and (11A and 11B) respectively, offset with respect to one another in the direction of their displacement and mounted transversely with respect to said members.

3. Device according to any one of the preceding claims, characterized in that each endless flexible member includes two parallel chains or bands (12A, 12B) and (13A, 13B), the chains or bands (13A and 13B) of one of the endless flexible members being disposed in parallel position between the chains or bands (12A and 12B) of the other endless flexible member.

4. Device according to claim 3, characterized on that the two chains or bands (12A and 12B) of one of the endless flexible members are connected to one another by two rigid members (11A and 11B), parallel to one another and perpendicular to the longitudinal direction of the corresponding chains or bands, said rigid members being axially offset with respect to one another, and in that the two chains or bands (13A and 13B) of the other endless flexible member are likewise connected to one another by two transversal rigid members (10A and 10B), parallel to one another and perpendicular to the longitudinal direction of the corresponding chains or bands, these rigid members being axially offset with respect to one another.

5. Device according to claim 5, characterized in that the chains or bands (12A and 12B) of one of the endless flexible members are tensioned between two first parallel axles, in that the chains or bands (13A and 13B) of the other endless flexible member are tensioned between two second parallel axles, and in that the first axles are parallel to the second ones.

6. Device according to claim 5, characterized in that at least one of the first axles is coaxial with one of the second axles.

7. Device according to claim 2, characterized in that each endless flexible member includes a chain or band (12A, 13A), these two bands being disposed parallel to one another, in that each chain or band carries at least one rigid member (10A, 11A), and in that the conveyor (20) and at least the intermediate support (22) are disposed in parallel position and laterally offset with respect to said chains or bands (12A, 13A).

8. Device according to claim 1, characterized in that the intermediate support (22) is a fixed platform.

9. Device according to claim 1, characterized in that the intermediate support (22) is an endless belt conveyor.

10. Device according to claim 1, characterized in that the intermediate support (22) consists of an end section of the conveyor (20).

11. Method of using the device according to any one of the preceding claims, this device comprising at least two rigid members movable according to the direction of transport of the products on the conveyor, these rigid members being respectively linked to two endless flexible members each forming a closed loop, and arranged for translational displacement thereof while driving the rigid members on at least one common rectilinear section, characterized in that one controls independently of one another the drive mechanisms of the two rigid members movable as a function of signals transmitted to control means for controlling said drive mechanisms, the following products being maintained while the preceding products are on the receiving surface and the following products being pushed towards the receiving surface when this surface is clear.

FIG. 1

FIG. 2 √

FIG. 11

FIG. 12

FIG. 3

FIG. 4

FIG. 5

FIG. 6

**FIG. 7**

**FIG. 8**

**FIG. 9**

**FIG. 10**